# FASCICULE DE BREVET EUROPEEN

(11) **EP 0 678 172 B1**
(45) Date de publication et mention de la délivrance du brevet: **15.07.1998**
(21) Numéro de dépôt: 94928420.2
(22) Date de dépôt: 20.09.1994
(51) Int. Cl.: F16D 13/71

(54) **MODULE D'EMBRAYAGE A PLATEAU DE PRESSION EPAISSI A LA PERIPHERIE**
KUPPLUNGSEINHEIT MIT DRUCKPLATTE MIT VERDICKTEM RAND
CLUTCH MODULE HAVING A THICK-EDGED PRESSURE PLATE

(30) Priorité: 24.09.1993 FR 9311386
(43) Date de publication de la demande: 25.10.1995
(73) Titulaire: VALEO, 75017 Paris (FR)
(72) Inventeur: SEVENNEC, Yvon, . (FR); VIOLA, Paolo, F-75007 Paris (FR)
(74) Mandataire: Gamonal, Didier
(86) Numéro de dépôt international: FR9401097
(87) Numéro de publication internationale: WO9508725

(56) Documents cités:
- EP-A- 0 252 600
- AT-B- 183 659
- DE-A- 3 422 019
- FR-A- 2 546 594

## Description

L'invention concerne les modules d'embrayage, notamment pour véhicules automobiles.

Ainsi qu'on le sait, un module d'embrayage comporte, de manière unitaire, un mécanisme, une friction d'embrayage et un volant, le mécanisme étant lui-même formé d'un couvercle avec une paroi latérale, d'un diaphragme qui prend appui sur le couvercle, et d'un plateau de pression sur lequel porte le diaphragme.

L'invention concerne plus particulièrement le cas où, comme décrit dans le document FR-A-2 546 594 conforme au préambule de la revendication 1, le volant est formé d'un plateau de réaction, qui est similaire au plateau de pression, et d'un flasque de support, sur lequel est fixé le couvercle du mécanisme.

L'un des problèmes à surmonter dans la réalisation des modules d'embrayage de ce type est d'obtenir à encombrement diamétral et/ou à poids total donné une inertie maximale, pour augmenter la capacité d'absorption des irrégularités cycliques du régime de rotation.

L'invention a pour objet un module d'embrayage dans lequel cette inertie est optimisée de manière très simple et qui présente en outre d'autres avantages.

Ce module d'embrayage, qui est du genre concerné, est caractérisé en ce que le plateau de pression est plus épais à sa périphérie externe qu'à sa périphérie interne, en ce que les languettes sont allongées circonférentiellement, et en ce que la tranche périphérique du plateau de pression s'étend, entre deux pattes, suivant une circonférence dont le diamètre est supérieur à celui de la circonférence suivant laquelle sont établis les moyens de fixation des languettes.

Ainsi, on favorise l'augmentation de l'inertie pour un encombrement diamétral donné et le centre de gravité de la section transversale du plateau de pression se trouve avantageusement déporté radialement en direction de sa périphérie externe, au bénéfice de son inertie.

Il en est évidemment de même pour le plateau de réaction, compte tenu de sa similarité avec le plateau de pression.

Corollairement, à inertie donnée, l'encombrement diamétral peut avantageusement être réduit. Pour réduire encore cet encombrement diamétral, le diamètre de la circonférence suivant laquelle sont établis les moyens de fixation des languettes est, suivant l'invention, inférieur au diamètre intérieur de la paroi latérale du couvercle, et les languettes s'étendent radialement au plus près de la tranche périphérique de la friction d'embrayage.

Pour réduction de l'encombrement, diamétral ces languettes s'étendent en arc de cercle.

La similarité entre le plateau de réaction et le plateau de pression conduit par ailleurs avantageusement à une simplification des fabrications.

Les caractéristiques et avantages de l'invention ressortiront d'ailleurs de la description qui va suivre, à titre d'exemple, en référence aux dessins schématiques annexés sur lesquels :

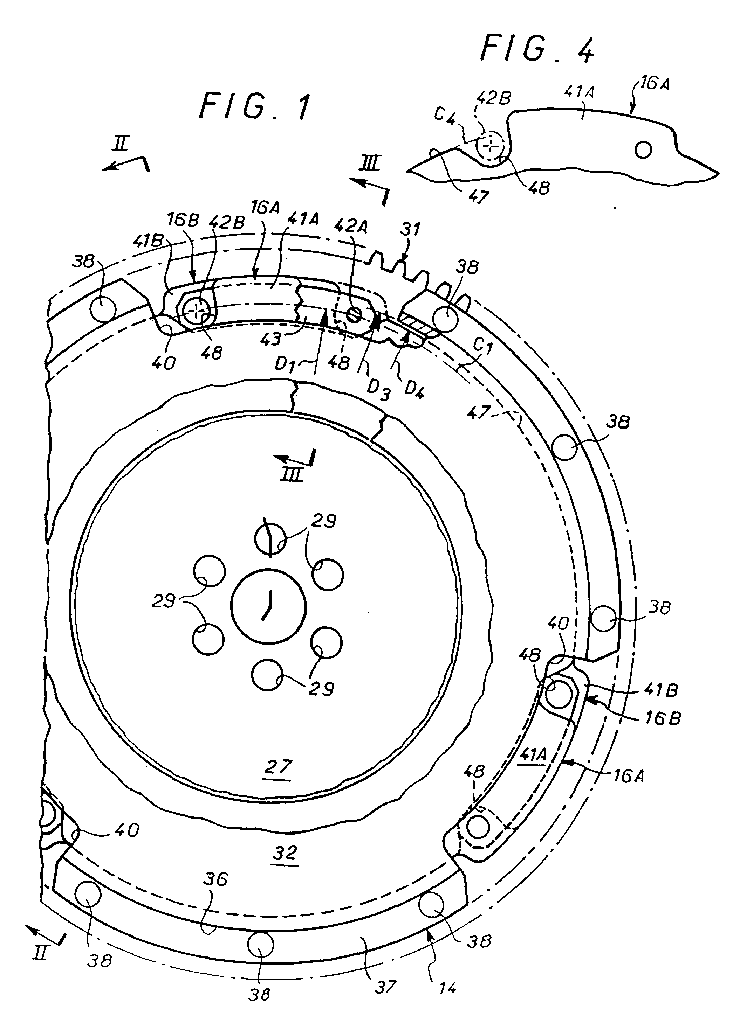

la figure 1 est, avec des arrachements locaux, une vue partielle en élévation d'un module d'embrayage suivant l'invention, suivant la flèche I de la figure 2 ;
la figure 2 en est une vue en coupe axiale en place, suivant la ligne brisée II-II de la figure 1 ;
la figure 3 en est une vue partielle en coupe axiale, suivant la ligne III-III de la figure 1 ;
la figure 4 est, dérivée de la figure 1, une vue partielle en élévation du plateau de pression mis en oeuvre dans ce module d'embrayage.

Tel qu'illustré sur ces figures, le module d'embrayage 10 suivant l'invention comporte, successivement axialement, de manière connue en soi, un mécanisme 11, une friction d'embrayage 12, et un volant 13.

Le mécanisme 11 comporte, lui-même, successivement axialement, un couvercle 14, un diaphragme 15, qui prend appui sur le couvercle 14, et un plateau de pression 16A, sur lequel porte le diaphragme 15.

Ici, le mécanisme 11 est de type "poussé" et le diaphragme 15 prend donc appui sur le couvercle 14 du côté de la périphérie de plus petit diamètre de sa partie périphérique 18 formant rondelle Belleville cependant qu'il porte sur le plateau de pression 16A du côté de la périphérie de plus grand diamètre de celle-ci.

Sous la sollicitation du diaphragme 15, le plateau de pression 16A est apte à serrer contre le volant 13 le disque de friction 19, à garnitures de frottement 20, que comporte la friction d'embrayage 12.

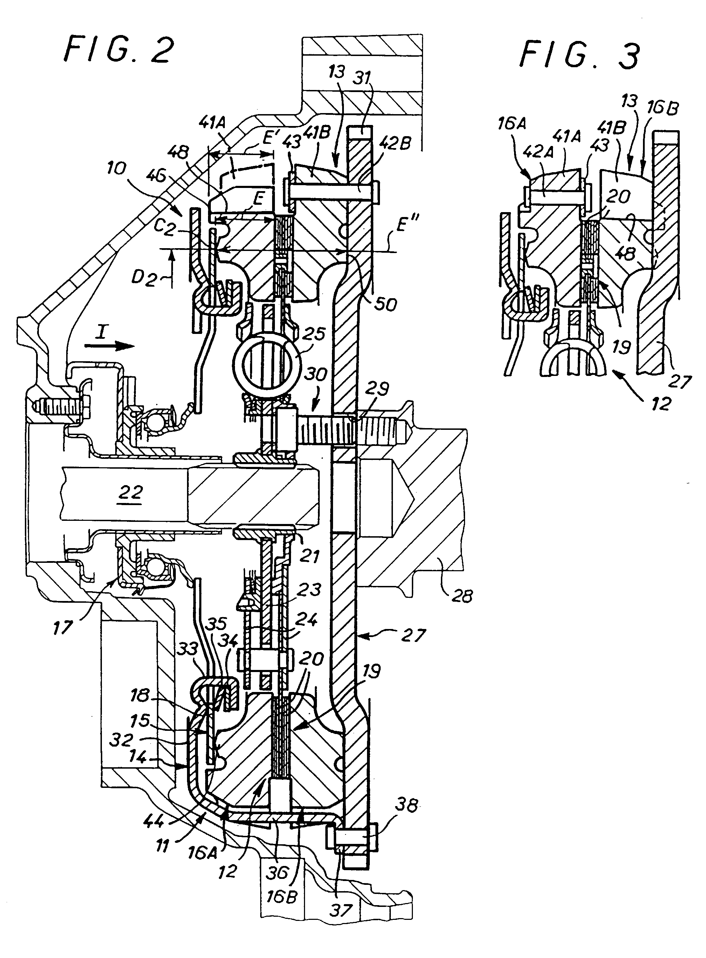

Pour le desserrage du disque de friction 19, une butée de débrayage 17, représentée en traits fins sur la figure 2, agit en poussée sur les doigts du diaphragme 15, à l'extrémité de ceux-ci.

Ici, la friction d'embrayage 12 est à moyeu amortisseur.

Outre un moyeu 21, par lequel elle est adaptée à être calée en rotation sur un arbre mené 22, en l'espèce l'arbre de sortie d'une boîte de vitesses, et un voile de moyeu 23, qui est solidaire du moyeu 21, elle comporte deux rondelles de guidage 24, qui s'étendent chacune respectivement de part et d'autre du voile de moyeu 23, et dont est solidaire le disque de friction 19, avec, interposés circonférentiellement entre le voile de moyeu 23 et ces rondelles de guidage 24, des moyens élastiques à action circonférentielle, ici des ressorts 25 du type ressort à boudin dont chacun est individuellement logé pour partie dans une fenêtre du voile de moyeu 23 et pour partie dans des fenêtres des rondelles de guidage 24.

Le volant 13, quant à lui, est formé, d'une part, d'un plateau de réaction 16B, qui est similaire au plateau de pression 16A, et contre lequel porte le disque de friction 19, et, d'autre part, d'un flasque de support 27 ici en acier, sur lequel est fixé le couvercle 14 du mécanisme 11, et par lequel l'ensemble, c'est-à-dire le module d'embrayage 10 pris unitairement, est adapté à être rapporté sur un arbre menant 28, en l'espèce le vilebrequin d'un moteur à combustion interne.

Ici, les plateaux 16A, 16B sont en fonte et le flasque de support 27 comporte plusieurs perçages 29, repartis circulairement, pour le passage de vis propres à la fixation nécessaire.

A sa périphérie, il comporte une denture 31, formant couronne de démarreur. Ici, le couvercle 14 comporte, transversalement, un fond 32, qui, s'étendant annulairement, fournit un appui à la partie périphérique 18 formant rondelle Belleville du diaphragme 15, d'un premier côté de celle-ci, et dont sont issues des pattes 33 fournissant un appui à cette partie périphérique 18 de l'autre côté de celle-ci, par l'intermédiaire d'une rondelle entretoise 34 et d'une rondelle élastique 35. Le couvercle 14 comporte, en outre, axialement, une paroi latérale 36, qui est globalement cylindrique, avec, en section transversale, un contour circulaire, et par laquelle il contourne successivement' le plateau de pression 16A, le disque de friction 19 et le plateau de réaction 16B. Il comporte, enfin, transversalement, en direction radialement opposée au fond 32, un rebord 37, par lequel il est fixé au flasque de support 27, à l'aide, ici, de rivets 38. Le plateau de pression 16A et le plateau de réaction 16B présentent, périphériquement, de place en place, à la faveur d'échancrures 40 affectant localement la paroi latérale 36, au moins,, du couvercle 14, des pattes 41A, 41B, qui s'étendent radialement, en direction opposée à l'axe de l'ensemble, et auxquelles sont attelées, par des moyens de fixation 42A, 42B détaillés ultérieurement, des languettes 43, qui, allongées circonférentiellement suivant une même circonférence de l'ensemble, sont élastiquement déformables axialement.

Ces languettes 43 ont donc une forme de segment circulaire pour réduire l'encombrement diamétral et sont fixées ainsi par une de leurs extrémités au plateau de réaction 16B et à l'autre de leurs extrémités au plateau de pression 16A.

Ici, ces pattes 41A, 41B sont au nombre de trois, et elles sont régulièrement réparties circulairement à 120' deux à deux. Ces pattes 41A, 41B sont de forme annulaire et s'étendent en saillie radiale par rapport à la paroi 36.

Ici, les échancrures 40 correspondantes du couvercle 14 affectent tant la paroi latérale 36 de celui-ci que son rebord 37.

Elles mordent en outre sur son fond 32.

Ici, les moyens de fixation 42A attelant aux pattes 41A du plateau de pression 16A les languettes 43 sont des rivets, et il en est de même pour les moyens de fixation 42B attelant ces mêmes languettes 43 aux pattes 41B du plateau de réaction 16B.

En variante, il peut s'agir de boulons. En outre, les moyens de fixation 42B assurent conjointement, ici, la fixation du plateau de réaction 16B au flasque de support 27.

Ici, les moyens de fixation 42A, 42B s'étendent suivant une même circonférence C1 de diamètre Dl.

Soit, par ailleurs, D2 le diamètre de la circonférence Ci suivant laquelle le diaphragme 15 porte sur le plateau de pression 16A par sa partie périphérique 18 formant rondelle Belleville.

Ici, le plateau de pression 16A présente, annulairement, au moins de place en place, pour cet appui, un bourrelet 44, ou cordon, dont la ligne de crête, ici anguleuse, matérialise la circonférence C2.

Ce bourrelet 44 est ici fractionné circulairement en 25 segments, pour une meilleure ventilation de l'ensemble.

En variante, il peut être circulairement continu. Suivant l'invention, le plateau de pression 16A est plus épais à sa périphérie externe qu'à sa périphére interne.

Plus précisément, radialement au-delà de la circonférence C2, par rapport à l'axe de l'ensemble, c'est-à-dire radialement au-delà de la circonférence C2 suivant laquelle le diaphragme 15 porte sur lui, le plateau de pression 16A a au moins localement une épaisseur E', mesurée axialement, supérieure à son épaisseur E, mesurée dans les mêmes conditions, au droit de cette circonférence C2.

Ici, le bourrelet 44 du plateau de pression 16A sur lequel porte le diaphragme 15 est axialement en retrait par rapport à un bourrelet 46 qu'il présente annulairement, de manière circulairement continue, à sa périphérie externe, à la racine des pattes 41A.

C'est ce bourrelet 46 qui a axialement une épaisseur E' abstraction faite d'un léger dégagement au-delà de la surface de frottement contre laquelle porte le disque de friction 19.

Ici, la tranche de la partie périphérique 18 formant rondelle Belleville du diaphragme 15 s'étend au droit du bourrelet 46 du plateau de pression 16A, au voisinage de ce bourrelet 46, mais à légère distance de celui-ci pour éviter toute interférence avec lui.

Ici, le diamètre Dl de la circonférence C1 suivant laquelle sont établis les moyens de fixation 42A, 42B des languettes 43 est inférieur au diamètre intérieur D3 de la paroi latérale 36 du couvercle 14. Conjointement, les languettes 43 s'étendent radialement au plus près de la tranche périphérique de la friction d'embrayage 12, c'est-à-dire, plus précisément, de la tranche périphérique externe du disque de friction 19 de celle-ci.

Il résulte, globalement, de ce qui précède, une grande compacité, diamétralement, pour l'ensemble.

Autrement dit, à inertie donnée, l'encombrement diamétral est réduit.

Ici, suivant l'invention, entre deux pattes 41A, la tranche périphérique 47 du plateau de pression 16A s'étend suivant une circonférence C4 dont le diamètre D4 est supérieur à celui D1 de la circonférence C1 suivant laquelle sont établis les moyens de fixation 42A, 42B des languettes 43, tout en étant évidemment inférieur au diamètre intérieur D3 de la paroi latérale 36 du couvercle 14.

A encombrement diamétral donné, l'inertie du plateau de pression 16A se trouve ainsi accrue, et donc celle, aussi, du plateau de réaction 16B.

Pour donner cependant accès aux moyens de fixation 42B attelant les languettes 43 aux pattes 41B du plateau de réaction 16B, le plateau de pression 16A présente, en bordure de chacune de ses pattes 41A, du côté circonférentiel correspondant, au moins, de celles-ci, une échancrure 48.

Par similarité, le plateau de réaction 16B présente aussi des échancrures 48.

Préférentiellement, et tel que représenté, le plateau de réaction 16B est en fait identique au plateau de pression 16A, à la seule différence que la face 50 par laquelle il est adossé au flasque de support 27, qui correspond à la face du plateau de pression 16A sur laquelle porte le diaphragme 15, est arasée, pour en permettre un appui à plat sur ce flasque de support 27.

Ainsi qu'on le notera, le bourrelet 46 du plateau de pression 16A protège avantageusement de tout choc, tant radialement qu'axialement, le bourrelet 44, notamment lors des manipulations préalables au montage, son épaisseur E' étant supérieure à celle E de ce bourrelet 44. L'appui prévu pour le diaphragme 15 se trouve ainsi avantageusement ménagé.

Au montage, il est d'abord procédé, dans un premier temps, à l'assemblage, à l'aide des rivets constituant les moyens de fixation 42B, du flasque de support 27, du plateau de réaction 16B et de l'extrémité concernée des languettes 43.

Dans un deuxième temps, et après insertion de la friction d'embrayage 12, il est procédé à la fixation du plateau de pression 16A sur l'autre extrémité des languettes 43, à l'aide des rivets constituant les moyens de fixation 42A.

Les languettes 43 exerçant un effort de rappel du plateau de pression 16A en direction du plateau de réaction 16B, les garnitures de frottement 20 du disque de friction 19 se trouvent alors pincées entre ceux-ci.

Il est donc formé à ce stade un sous-ensemble, sur lequel il est possible de mesurer la distance E" s'étendant axialement, au droit de la circonférence C2, entre, d'une part, la ligne de crête du bourrelet 44 matérialisant cette circonférence C2, et, d'autre part, la face interne du flasque de support 27.

En fonction de cette distance E", on choisit un couvercle 14 ayant axialement la cote permettant au diaphragme 15 d'occuper axialement la position convenable, pour l'exercice de la charge souhaitée sur le plateau de pression 16A.

En variante, on intercale éventuellement une cale entre le rebord 37 du couvercle 14 et le flasque de support 27 pour l'ajustement de cette cote.

Ainsi qu'on le notera, également, les pattes 41A, 41B des plateaux de pression et de réaction 16A, 16B ont avantageusement une grande longueur circonférentielle, ce qui facilite l'implantation dans ces pattes 41A, 41B des perçages éventuellement nécessaires pour l'équilibrage dynamique de l'ensemble.

Cela permet corollairement l'élimination des pions de centrage usuellement prévus entre le plateau de réaction 16B et le flasque de support 27, l'équilibrage dynamique se faisant sur l'ensemble du module d'embrayage 10.

L'encombrement axial se trouve en outre ainsi avantageusement réduit.

Bien entendu, l'invention ne se limite pas à la forme de réalisation décrite et représentée, mais englobe toute variante d'exécution.

En particulier, au lieu de mettre en oeuvre des pattes 33 venues du couvercle 14, les moyens d'assemblage assujettissant de manière pivotante à ce couvercle 14 le diaphragme 15 peuvent mettre en oeuvre des colonnettes, comme décrit par exemple dans le document FR-A-1 524 350 (US-A-3,499,512).

## Revendications

1. Module d'embrayage du genre comportant un mécanisme (11), une friction d'embrayage (12) et un volant (13), le mécanisme (11) comportant lui-même un couvercle (14), un diaphragme (15), qui prend appui sur le couvercle (14) et un plateau de pression (16A), sur lequel porte le diaphragme (15), cependant que le volant (13) est formé d'un plateau de réaction (16B), qui est similaire au plateau de pression (16A) , et un flasque de support (27), sur lequel est fixé le couvercle (14) dans lequel le plateau de pression (16A) et le plateau de réaction (16B) présentent périphériquement, de place en place, à la faveur d'échancrures (40) affectant localement une paroi latérale (36) au moins du couvercle (14), des pattes (41A, 41B), qui s'étendent radialement, auxquelles sont attelées par des moyens de fixation (42A, 42B) des languettes (43) allongées et qui sont fixées ainsi à l'une de leurs extrémités au plateau de réaction (16B) et à l'autre de leurs extrémités au plateau de pression (16A), caractérisé en ce que le plateau de pression (16A) est plus épais à sa périphérie externe qu'à sa périphérie interne, en ce que les languettes (43) sont allongées circonférentiellement, et en ce que circonférentiellement, la tranche périphérique (47) du plateau de pression (16A) s'étend suivant une circonférence (C4) dont le diamètre (D4) est supérieur à celui (D1) de la circonférence (C1) suivant laquelle sont établis les moyens de fixation (42A, 42B) des languettes (43) .

2. Module d'embrayage suivant la revendication 1, caractérisé en ce que, radialement au-delà de la circonférence (C2) suivant laquelle le diaphragme (15) porte sur lui, le plateau de pression (16A) a au moins localement une épaisseur (E1) supérieure à son épaisseur (E) au droit de cette circonférence (C2).

3. Module d'embrayage suivant la revendication 1 ou 2 caractérisé en ce que, le diamètre (D1) de la circonférence (C1) suivant laquelle sont établis lesdits moyens de fixation (42A, 42B) est inférieur au diamètre intérieur (D3) de la paroi latérale (36) du couvercle (14).

4. Module d'embrayage suivant la revendication 3, caractérisé en ce que les languettes (43) s'étendent radialement au plus près de la tranche périphérique de la friction d'embrayage (12).

5. Module d'embrayage suivant l'une quelconque des revendications 1 à 4, caractérisé en ce que le plateau de réaction (16B) est identique au plateau de pression (16A) à la seule différence que la face (50) par laquelle il est adossé au flasque de support (27), qui correspond à la face du plateau de pression (16A) sur laquelle porte le diaphragme (15), est arasée.

6. Module d'embrayage suivant la revendication 5, caractérisé en ce que, pour donner accès aux moyens de fixation (42B) attelant les languettes (43) aux pattes (41B) du plateau de réaction (16B), le plateau de pression (16A) présente, en bordure de chacune de ses pattes (41A), d'un côté circonférentiel au moins de celles-ci, une échancrure (48).

## Patentansprüche

1. Kupplungseinheit, umfassend einen Mechanismus (11), eine Reibungskupplungsscheibe (12) und ein Schwungrad (13), wobei der Mechanismus (11) selbst einen Deckel (14), eine Membranfeder (15), die auf dem Deckel (14) zur Auflage kommt, und eine Druckplatte (16A) umfaßt, auf der die Membranfeder (15) anliegt, wohingegen das Schwungrad (13) aus einer Gegenanpreßplatte (16B), die ähnlich wie die Druckplatte (16A) ausgeführt ist, und einem Tragflansch (27) besteht, auf dem der Deckel (14) befestigt ist, wobei die Druckplatte (16A) und die Gegenanpreßplatte (16B) umfangsmäßig stellenweise anhand von Aussparungen (40), die örtlich mindestens eine Seitenwand (36) des Deckels (14) betreffen, Ansätze (41A, 41B) aufweisen, die sich radial erstrecken, an denen durch Befestigungsmittel (42A, 42B) lang gestreckte Zungen (43) angefügt sind und die so an einem ihrer Enden an der Gegenanpreßplatte (16B) und an dem anderen ihrer Enden an der Druckplatte (16A) befestigt sind , **dadurch gekennzeichnet,** daß die Druckplatte (16A) an ihrem äußeren Rand dicker als an ihrem inneren Rand ist, daß die Zungen (43) umfangsmäßig lang gestreckt sind und daß sich umfangsmäßig die Umfangskante (47) der Druckplatte (16A) entlang einem Kreisumfang (C4) erstreckt, dessen Durchmesser (D4) größer als der Durchmesser (D1) des Kreisumfangs (C1) ist, an dem entlang die Befestigungsmittel (42A, 42B) der Zungen (43) angeordnet sind.

2. Kupplungseinheit nach Anspruch 1 , **dadurch gekennzeichnet,** daß radial hinter dem Kreisumfang (C2), an dem entlang die Membranfeder (15) darauf anliegt, die Druckplatte (16A) zumindest örtlich eine Dicke (E1) aufweist, die größer als ihre Dicke (E) an diesem Kreisumfang (C2) ist.

3. Kupplungseinheit nach Anspruch 1 oder 2 , **dadurch gekennzeichnet,** daß der Durchmesser (D1) des Kreisumfangs (C1), an dem entlang die besagten Befestigungsmittel (42A, 42B) angeordnet sind, kleiner als der Innendurchmesser (D3) der Seitenwand (36) des Deckels (14) ist.

4. Kupplungseinheit nach Anspruch 3 , **dadurch gekennzeichnet,** daß sich die Zungen (43) radial möglichst nahe an der Umfangskante der Reibungskupplungsscheibe (12) erstrecken.

5. Kupplungseinheit nach einem der Ansprüche 1 bis 4, **dadurch gekennzeichnet,** daß die Gegenanpreßplatte (16B) identisch mit der Druckplatte (16A) ausgeführt ist, wobei der einzige Unterschied darin besteht, daß die Fläche (50), mit der sie an den Tragflansch (27) angefügt ist, die der Fläche der Druckplatte (16A) entspricht, auf der die Membranfeder (15) anliegt, abgeglichen ist.

6. Kupplungseinheit nach Anspruch 5 , **dadurch gekennzeichnet,** daß, um einen Zugang zu den Befestigungsmitteln (42B) zu schaffen, die die Zungen (43) an die Ansätze (41B) der Gegenanpreßplatte (16B) anfügen, die Druckplatte (16A) am Rand jedes ihrer Ansätze (41A) auf mindestens einer Umfangsseite dieser Ansätze eine Aussparung (48) aufweist.

## Claims

1. A clutch module of the kind comprising a mechanism (11), a clutch friction wheel (12) and a flywheel (13), the mechanism (11) itself comprising a cover plate (14), a diaphragm (15) which bears on the cover plate (14), and a pressure plate (16A) on which the diaphragm (15) engages, while the flywheel (13) comprises a reaction plate (16B) which is similar to the pressure plate (16A), together with a support plate (27) on which the cover plate (14) is fixed, wherein the pressure plate (16A) and the reaction plate (16B) have from place to place, in slots (40) formed locally in a side wall (36) of at least the cover plate (14), radial peripheral lugs (41A, 41B) to which elongated tongues (43) are attached by fastening means (42A, 42B) so that they are fixed at one of their ends to the pressure plate (16A), characterised in that the pressure plate (16A) is thicker at its outer periphery than at its inner periphery, in that the tongues (43) are elongated circumferentially, and in that the peripheral edge (47) of the pressure plate (16A) extending circumferentially over a circumference (C4), the diameter (D4) of which is greater than the diameter (D1) of the circumference (C1) on which the fastening means (42A, 42B) for the tongues (43) are located.

2. A clutch module according to Claim 1, characterised in that, radially outside the circumference (C2) along which the diaphragm (15) engages on it, the pressure plate (16A) has at least locally a thickness (E1) which is greater than its thickness (E) along the said circumference (C2).

3. A clutch module according to Claim 1 or Claim 2, characterised in that the diameter (D1) of the circumference (C1) on which the said fastening means (42A, 42B) are located is smaller than the internal diameter (D3) of the side wall (36) of the cover plate (14).

4. A clutch module according to Claim 3, characterised in that the tongues (43) extend radially close to the outer portion of the clutch friction wheel (12).

5. A clutch module according to any one of Claims 1 to 4, characterised in that the reaction plate (16B) is identical to the pressure plate (16A), except only that the face (50) through which it abuts on the support plate (27), and which corresponds to the face of the pressure plate (16A) on which the diaphragm (15) engages, has a flush configuration.

6. A clutch module according to Claim 5, characterised in that, for the purpose of giving access to the fastening means (42B) which attach the tongues (43) to the lugs (41B) of the reaction plate (16B), the pressure plate (16A) has a slot (48) bounding each of its lugs (41A), on at least one circumferential side of these latter.
